# EUROPEAN PATENT SPECIFICATION

(11) **EP 3 907 894 B1**
(45) Date of publication and mention of the grant of the patent: **31.07.2024**
(21) Application number: 19912389.4
(22) Date of filing: 01.02.2019
(51) Int. Cl.: H04B 1/401, H04B 1/00

(54) **ANTENNA SELECTION METHOD AND TERMINAL DEVICE**
ANTENNENAUSWAHLVERFAHREN UND ENDGERÄTEVORRICHTUNG
PROCÉDÉ DE SÉLECTION D'ANTENNE ET DISPOSITIF TERMINAL

(43) Date of publication of application: 10.11.2021
(73) Proprietor: Huawei Technologies Co., Ltd., Shenzhen, Guangdong 518129 (CN)
(72) Inventor: LIU, Cheng, Shenzhen, Guangdong 518129 (CN); ZENG, Weicai, Shenzhen, Guangdong 518129 (CN); ZHU, Song, Shenzhen, Guangdong 518129 (CN); JIAO, Yalin, Shenzhen, Guangdong 518129 (CN); WANG, Jianlin, Shenzhen, Guangdong 518129 (CN)
(74) Representative: Epping - Hermann - Fischer
(86) International application number: PCT/CN2019/074477
(87) International publication number: WO 2020/155114

(56) References cited:
- EP-A1- 2 991 232
- WO-A1-2011/084715
- WO-A1-2012/081475
- CN-A- 109 004 947
- CN-U- 207 766 262
- US-A1- 2012 202 561
- US-A1- 2013 222 206
- US-A1- 2017 365 914

## Description

### TECHNICAL FIELD

This application relates to the field of terminal technologies, and in particular, to an antenna selection method and a terminal device.

### BACKGROUND

When a terminal device is equipped with two antennas, one of the antennas is a built-in antenna, that is, an antenna disposed inside the terminal device, and the other antenna is an external antenna, that is, an antenna disposed outside the terminal device. When the external antenna does not work, the terminal device selects the built-in antenna, and sends or receives data by using the built-in antenna. When the external antenna works, the terminal device selects the external antenna, and sends or receives data by using the external antenna.

However, when frequency ranges supported by the external antenna and the built-in antenna are different, if the terminal device directly selects an antenna, a communication problem such as a network disconnection of the terminal device or a registration failure occurs, thereby affecting user experience.
US 2017/365914 A1 relates to an electronic device including a first antenna element configured selectively to receive signals of a first frequency band and a second frequency band or of the first frequency band and a third frequency band, a second antenna element configured to receive a signal of the third frequency band, a transceiver configured to be electrically connected with the first antenna element and the second antenna element, and a processor configured to be electrically connected with the transceiver. The electronic device performs carrier aggregation using the second frequency band and the third frequency band.
EP 2991232 A1 relates to an electronic device, which includes at least a first antenna and a second antenna and a communication processor configured to transmit at least two signals corresponding to first and second frequency bands through the first antenna and to receive signals corresponding to the first and second frequency bands through the second antenna.
WO 2011/084715 A1 describes techniques for supporting a plurality of radios on a wireless device with a limited number of antennas. In one design, at least one radio may be selected from among the plurality of radios on the wireless device. At least one antenna may be selected for the at least one radio from among a plurality of antennas, e.g., based on a configurable mapping of the plurality of radios to the plurality of antennas. One or more antennas may be shared between radios to reduce the number of antennas. The at least one radio may be connected to the at least one antenna, e.g., via a switchplexer. Antenna selection may be performed dynamically (e.g., when the at least one radio becomes active, or when a change in performance of the at least one radio is required) such that good performance can be obtained.

### SUMMARY

This application provides an antenna selection method and a terminal device. Antenna information and an antenna selection rule are preset in a terminal device, and antenna selection is performed based on different working scenarios in which the terminal device is located. The invention is defined by the attached set of claims. Further details of the disclosed methods, devices and system are provided in the following, which are helpful for understanding the claimed invention.

### BRIEF DESCRIPTION OF DRAWINGS

FIG. 1 is a schematic structural diagram of a terminal device according to this application;
FIG. 2(a) is a schematic diagram of an antenna scenario according to this application;
FIG. 2(b) is a schematic diagram of an antenna selection method according to this application;
FIG. 3 is a schematic diagram of a scenario in which an LTE antenna and a Wi-Fi antenna coexist according to this application;
FIG. 4 is a schematic diagram of a scenario in which there are a plurality of LTE antennas according to this application;
FIG. 5 is a schematic diagram of a scenario in which there are a plurality of interfaces according to this application;
FIG. 6 is a schematic diagram of a scenario of a fixed network deployment environment according to this application;
FIG. 7 is a schematic structural diagram of a terminal device according to this application;
FIG. 8(a) is a schematic structural diagram of another terminal device according to this application; and
FIG. 8(b) is a schematic structural diagram of still another terminal device according to this application.

### DESCRIPTION OF EMBODIMENTS

Terms used in the following embodiments of this application are merely for the purpose of describing specific embodiments, but are not intended to limit this application. The terms "one", "a" and "this" of singular forms used in this specification and the appended claims of this application are also intended to include plural forms, unless otherwise specified in the context clearly. It should also be understood that the term "and/or" used in this application refers to and includes any or all possible combinations of one or more of listed items.

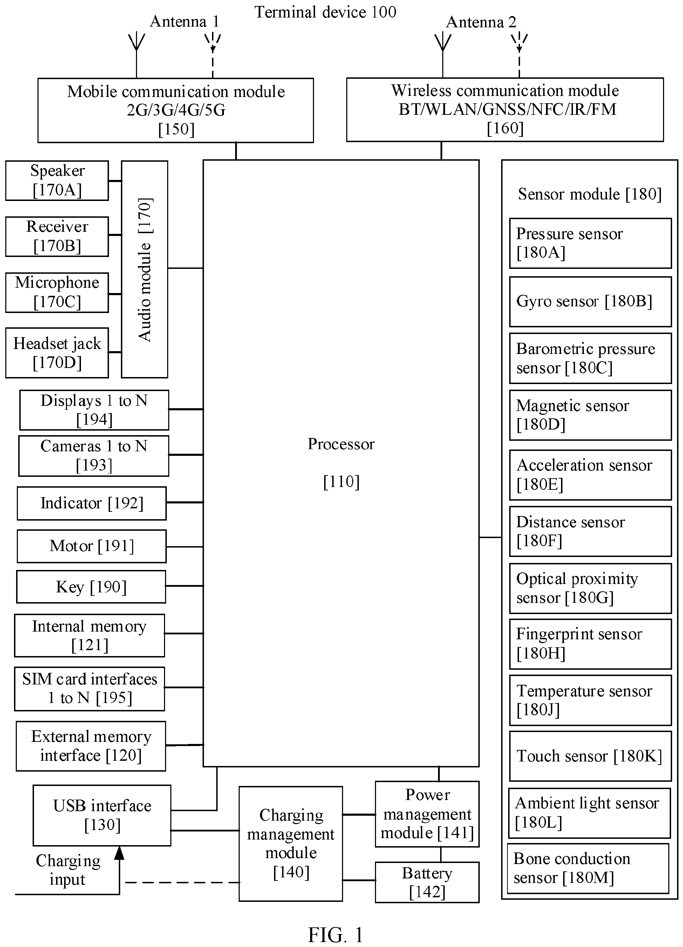

FIG. 1 is a schematic structural diagram of a terminal device 100.

The terminal device 100 may include a processor 110, an external memory interface 120, an internal memory 121, a USB interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a key 190, a motor 191, an indicator 192, a camera 193, a display 194, a SIM card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention constitutes no specific limitation on the terminal device 100. In some other embodiments of this application, the terminal device 100 may include more or fewer components than those shown in the figure, or combine some components, or split some components, or have different component arrangements. The illustrated components may be implemented in hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural network processing unit (neural-network processing unit, NPU). Different processing units may be independent components, or may be integrated into one or more processors.

The controller may be a nerve center and a command center of the terminal device 100. The controller may generate an operation control signal based on instruction operation code and a time sequence signal, to control instruction fetching and instruction execution.

The memory may be further disposed in the processor 110, and is configured to store an instruction and data. In some embodiments, the memory in the processor 110 is a cache. The memory may store an instruction or data that is used or cyclically used by the processor 110. If the processor 110 needs to use the instruction or the data again, the instruction or the data may be invoked directly from the memory. This avoids repeated access and reduces a waiting time of the processor 110, thereby improving efficiency of the system.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

A wireless communication function of the terminal device 100 may be implemented by using the antenna 1, the antenna 2, the mobile communication module 150, the wireless communication module 160, the modem processor, the baseband processor, and the like.

The antenna 1 and the antenna 2 are configured to transmit and/or receive electromagnetic wave signals. Each antenna in the terminal device 100 may be configured to cover a single or more communication bands. Different antennas may be further multiplexed to improve antenna utilization. For example, a cellular network antenna may be multiplexed as a diversity antenna of a wireless local area network. In some other embodiments, the antenna may be used in combination with a tuning switch.

The mobile communication module 150 may provide a wireless communication solution that is applied to the terminal device 100 and that includes 2G/3G/4G/5G or the like. The mobile communication module 150 may include at least one filter, a switch, a power amplifier, a low noise amplifier (Low Noise Amplifier, LNA), and the like. The mobile communication module 150 may receive an electromagnetic wave by using the antenna 1, perform processing such as filtering and amplification on the received electromagnetic wave, and transmit the received electromagnetic wave to the modem processor for demodulation. The mobile communication module 150 may further amplify a signal modulated by the modem processor, and convert the signal into an electromagnetic wave by using the antenna 1 for radiation. In some embodiments, at least some function modules of the mobile communication module 150 may be disposed in the processor 110. In some embodiments, at least some function modules of the mobile communication module 150 and at least some modules of the processor 110 may be disposed in a same device.

The modem processor may include a modulator and a demodulator. The modulator is configured to modulate a low frequency baseband signal to be sent into a medium and high frequency signal. The demodulator is configured to demodulate a received electromagnetic wave signal into a low frequency baseband signal. Then, the demodulator transmits the low frequency baseband signal obtained through demodulation to the baseband processor for processing. After being processed by the baseband processor, the low frequency baseband signal is transmitted to the application processor. The application processor outputs an audio signal by using an audio device (not limited to the speaker 170A, the receiver 170B, or the like), or display an image or a video by using the display 194. In some embodiments, the modem processor may be an independent device. In some other embodiments, the modem processor may be independent of the processor 110, and disposed in a same device with the mobile communication module 150 or another function module.

The wireless communication module 160 may provide a wireless communication solution that is applied to the terminal device 100 and that includes a wireless local area network (wireless local area networks, WLAN), Bluetooth (Bluetooth, BT), a global navigation satellite system (global navigation satellite system, GNSS), frequency modulation (frequency modulation, FM), near field communication (near field communication, NFC), infrared (infrared, IR), or the like. The wireless communication module 160 may be one or more devices integrating at least one communication processing module. The wireless communication module 160 receives an electromagnetic wave by using the antenna 2, performs frequency modulation and filtering processing on the electromagnetic wave signal, and sends a processed signal to the processor 110. The wireless communication module 160 may further receive a tobe-sent signal from the processor 110, perform frequency modulation and amplification on the signal, and convert the signal into an electromagnetic wave by using the antenna 2 for radiation.

In some embodiments, the antenna 1 of the terminal device 100 is coupled to the mobile communication module 150, and the antenna 2 is coupled to the wireless communication module 160, so that the terminal device 100 can communicate with a network and another device by using a wireless communications technology. The wireless communications technology may include a technology such as a Global System for Mobile Communications (global system for mobile communications, GSM), a general packet radio service (general packet radio service, GPRS), Code Division Multiple Access (code division multiple access, CDMA), Wideband Code Division Multiple Access (wideband code division multiple access, WCDMA), Time-Division Code Division Multiple Access (time-division code division multiple access, TD-SCDMA), Long Term Evolution (long term evolution, LTE), BT, GNSS, WLAN, NFC, FM, and/or IR. The GNSS may include a global positioning system (global positioning system, GPS), a global navigation satellite system (global navigation satellite system, GLONASS), a BeiDou navigation satellite system

(BeiDou navigation satellite system, BDS), a quasi-zenith satellite system (quasi-zenith satellite system, QZSS), and/or a satellite-based augmentation system (satellite based augmentation systems, SBAS).

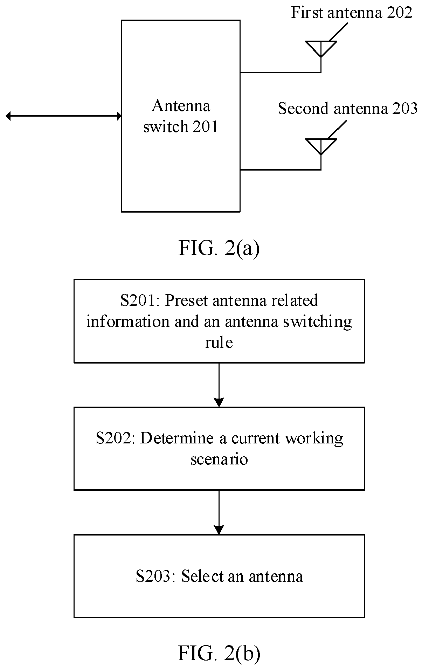

FIG. 2(a) and FIG. 2(b) show that an embodiment of an antenna selection method provided in this application is applied to a terminal device 100. FIG. 2(a) shows that the terminal device includes an antenna switch 201, a first antenna 202, and a second antenna 203. The first antenna 201 and the second antenna 203 may be considered as an antenna 1 in the terminal device 100. For example, the first antenna supports frequency bands B 1/B42, and the second antenna supports frequency bands B1/B7/B42. It can be learned that the first antenna and the second antenna support a same frequency band, and also support different frequency bands. The antenna switch 201 is configured to select an antenna based on an antenna selection rule.

FIG. 2(b) is a flowchart of an antenna selection method according to this application. Specific steps are as follows:
S201: A terminal device presets antenna information and an antenna selection rule.

In some embodiments, the terminal device may configure antenna information. The antenna information is antenna attribute information, and may specifically include one or more of information about a frequency band supported by an antenna, antenna isolation information, and carrier aggregation information.

When the terminal device is delivered from a factory, the antenna information and the antenna selection rule are preset. If the antenna information and the antenna selection rule change, a user may manually modify the antenna information and the antenna selection rule in the terminal device, or the terminal device may obtain the antenna information and the antenna selection rule from a network side by using a network.

S202: Determine a current working scenario.

The terminal device determines, based on information about a frequency band in which the terminal device is currently located or carrier aggregation information, a working scenario in which the terminal device is currently located.

Specifically, when sending or receiving data by using B1, the terminal device determines that the terminal device works in a scenario in which the frequency band information is B 1.

S203: The terminal device selects an antenna.

When the antenna of the terminal device uses frequency band information or is in a carrier aggregation working scenario, the terminal device selects an antenna that supports the corresponding frequency band information or the carrier aggregation working scenario, and an antenna before selection no longer works.

Specifically, it is assumed that one path of the terminal device has two antennas that support different frequency bands. Further referring to FIG. 1, for example, the first antenna 202 is an external antenna ANT0, supports frequency bands B7/B42, and supports carrier aggregation CA_7+42, and the second antenna 203 is a built-in antenna ANT1, supports frequency bands B1/B7/B20, and supports carrier aggregation CA_1+7 and CA_7+20.

According to the foregoing embodiment, the working scenario of the terminal device may include the following seven scenarios:
Scenario 1: The terminal device selects ANT1 when sending or receiving data by using the frequency band B1.
Scenario 2: When the terminal device sends or receives data by using the frequency band B7, both ANTO and ANT1 support B7, but the terminal device specifies that ANTO is to be selected by default.
Scenario 3: The terminal device selects ANT1 when sending or receiving data by using the frequency band B20.
Scenario 4: The terminal device selects ANTO when sending or receiving data by using the frequency band B42.
Scenario 5: The terminal device selects ANT1 when sending or receiving data by using the carrier aggregation CA_1+7.
Scenario 6: The terminal device selects ANT1 when sending or receiving data by using the carrier aggregation CA_7+20.
Scenario 7: The terminal device selects ANTO when sending or receiving data by using the carrier aggregation CA_7+42.

For example, when a current frequency band of the terminal device is B1, the terminal device selects the antenna ANT1 to send or receive data. When the frequency band of the terminal device changes to B7, the terminal device selects the antenna ANT0, and the terminal device transmits or receives data by using the antenna ANTO. When the terminal device switches to a working scenario of carrier aggregation CA_7+42, the terminal device selects the antenna ANT0, and the terminal device transmits or receives data by using the antenna ANTO.

Further, when the frequency band of the terminal device is the frequency band B7 supported by both the antennas ANTO and ANT1, the terminal device selects the antenna ANTO by default, and transmits or receives data by using the antenna ANTO. The antenna ANTO is a preset antenna to be selected by default by the terminal device in a frequency band supported by a plurality of antennas. The default antenna may be ANTO or ANT1. In this embodiment of this application, the default antenna is set to ANTO. Details are not described below.

By implementing the foregoing embodiment, the terminal device may select an antenna based on preset frequency bands supported by the antennas and carrier aggregation combination information and based on a current working frequency band or carrier aggregation combination, without causing a communication problem such as a network disconnection or a registration failure.

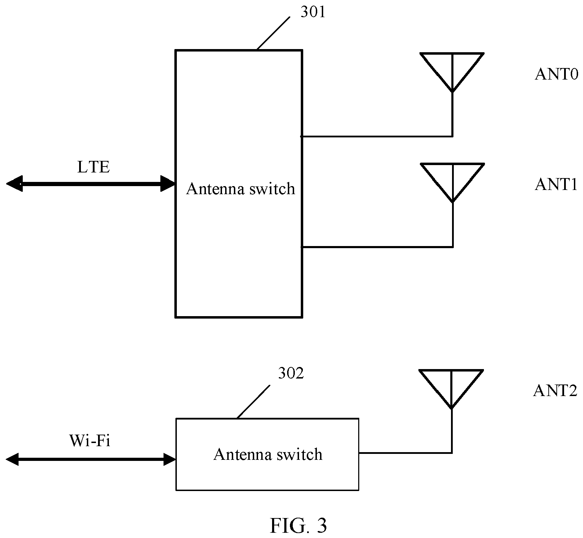

FIG. 3 shows another embodiment according to this application. When a terminal device supports both Long Term Evolution LTE and Wi-Fi, there is a plurality of LTE antennas and a Wi-Fi antenna. However, because isolation between different LTE antennas and the Wi-Fi antenna is different, the terminal device selects an antenna with large isolation relative to the Wi-Fi antenna to work, to alleviate a problem of mutual interference between the LTE antenna and the Wi-Fi antenna in the terminal device.

Specifically, as shown in FIG. 3, the terminal device is equipped with two LTE antennas that support different frequency bands, and the terminal device further has an antenna that supports Wi-Fi. It is assumed that the two antennas that support LTE are ANTO and ANT1, and the antenna that supports Wi-Fi is ANT2. With reference to FIG. 1, it can be learned that the antennas ANTO and ANT1 are the antenna 1 in the terminal device 100, and the antenna ANT2 is the antenna 2 in the terminal device 100.

First, information about frequency bands supported by the antennas ANT0, ANT1, and ANT2 and antenna isolation information are preset in the terminal device.

It is assumed that when either of the antennas ANTO and ANT1 supports two frequency bands B40 and B41, there are the following two scenarios:
When the terminal device is in a working scenario of the frequency band B40, isolation between the antennas ANTO and ANT2 is greater than isolation between ANT1 and ANT2.

When the terminal device is in a working scenario of the frequency band B41, isolation between the antennas ANTO and ANT2 is less than isolation between ANT1 and ANT2.

Antenna selection rules are as follows:
1. When B40 and B41 simultaneously work, the terminal device selects the LTE antenna ANTO.
2. When the LTE antenna in the terminal device sends or receives data by using the two frequency bands B40 and B41, and in this case, there is no coexistence risk between the LTE antenna and the Wi-Fi antenna, the terminal device selects the LTE antenna ANTO.
3. When the terminal device receives or sends data by using B40, and in this case, there is a coexistence risk between the LTE antenna and the Wi-Fi antenna, because the isolation between ANTO and ANT2 is greater, the LTE antenna ANTO is selected. When the terminal device sends or receives data by using B41, and in this case, there is a coexistence risk between the LTE antenna and the Wi-Fi antenna, because the isolation between ANT1 and ANT2 is greater, the LTE antenna ANT1 is selected.

The coexistence risk between the LTE antenna and the Wi-Fi antenna means that a problem such as harmonic interference or intermodulation interference exists between the LTE antenna and the Wi-Fi antenna.

Specific working scenarios of the terminal device are as follows:
Scenario 1: When the terminal device works in the single frequency band B40, the terminal device selects the antenna ANTO.
Scenario 2: When the terminal device works in the single frequency band B41, the terminal device selects the antenna ANTO.
Scenario 3: When the terminal device works in the frequency band B40 and simultaneously accesses Wi-Fi, and in this case, there is no coexistence risk between the LTE antenna and the Wi-Fi antenna, the LTE antenna ANTO is selected.
Scenario 4: When the terminal device works in the frequency band B41 and simultaneously accesses Wi-Fi, and in this case, there is no coexistence risk between the LTE antenna and the Wi-Fi antenna, the LTE antenna ANTO is selected.
Scenario 5: When the terminal device works in the frequency band B40 and simultaneously accesses Wi-Fi, and in this case, there is a coexistence risk between the LTE antenna and the Wi-Fi antenna, the LTE antenna ANTO is selected.
Scenario 6: When the terminal device works in the frequency band B41 and simultaneously accesses Wi-Fi, and in this case, there is a coexistence risk between the LTE antenna and the Wi-Fi antenna, the LTE antenna ANT1 is selected.

By implementing the foregoing embodiment, the terminal device selects, in different scenarios, an LTE antenna whose isolation from the Wi-Fi antenna is great to work, to improve coexistence performance of Wi-Fi and LTE.

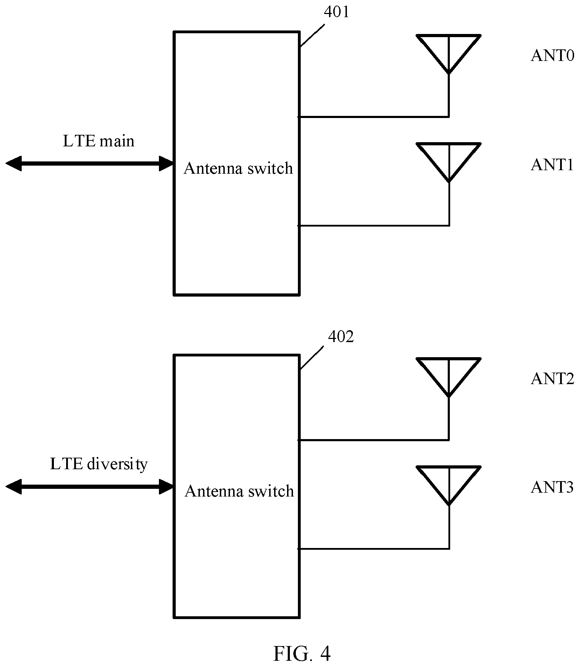

FIG. 4 shows another case based on the foregoing embodiment. When there is a risk such as harmonic interference or intermodulation interference between frequency bands of carrier aggregation of the terminal device, the terminal device selects an antenna with great isolation to work, to reduce impact caused by harmonic interference or intermodulation interference.

It is assumed that the terminal device is in a working scenario of carrier aggregation CA_12+4. In this case, there is a risk of harmonic interference or intermodulation interference, which causes distortion of a signal sent or received by an antenna, and normal communication cannot be performed. In this case, because the isolation between ANTO and ANT2 is greater than the isolation between ANT1 and ANT2, the terminal device selects ANTO as an LTE main antenna, and because isolation of ANT2 is greater than isolation of ANT3, the terminal device selects ANT2 as an LTE diversity antenna.

In the foregoing embodiment, impact caused by harmonic interference or intermodulation interference on normal working of the terminal device in a carrier aggregation working scenario can be effectively reduced.

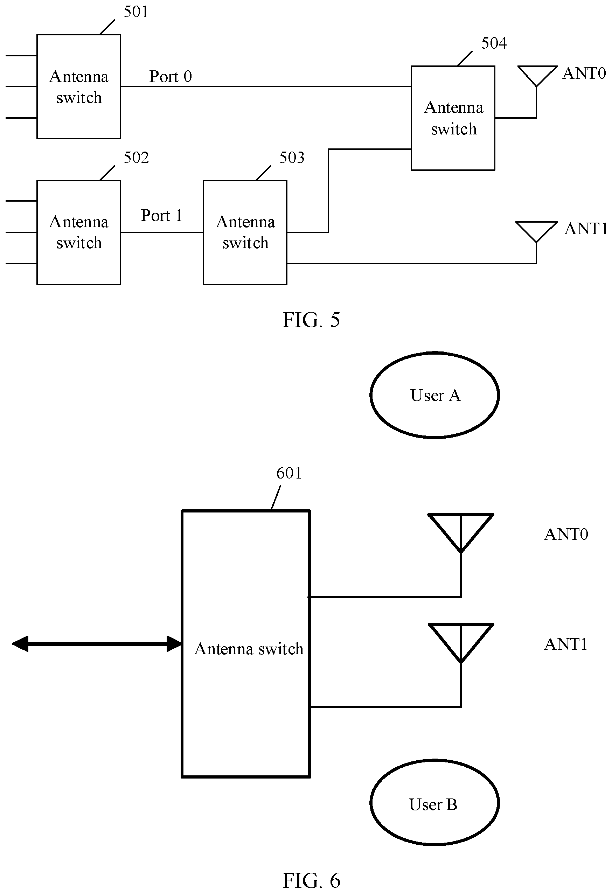

FIG. 5 shows an embodiment according to this application. The embodiment is applied to an antenna splitting solution of a terminal device, so that more carrier aggregation working scenarios and more frequency bands can be extended and supported.

As shown in FIG. 5, four antenna switches are included. An antenna switch 501 and an antenna switch 502 are single-pole single-throw switches configured to control connection and disconnection of ports Port 0 and Port 1. An antenna switch 503 and an antenna switch 504 are single-pole double-throw switches configured to select an antenna ANTO or an antenna ANT1 when the terminal device supports different frequency band information. The terminal device receives, by using Port 0, a frequency band supported by the antenna ANT0, and receives, by using Port 1, a frequency band supported by the antenna ANT1. A specific working method is as follows:
The terminal device presets information about frequency bands supported by the antennas ANTO and ANT1, and carrier aggregation that can be supported by a combination of the antennas ANTO and ANT1.

The terminal device sets antenna selection rules. Specific rules are as follows:
When the antenna ANT1 does not work, regardless of frequency band information on Port 0 and Port 1 or a scenario of carrier aggregation, in this case, the antenna switch 503 is opened, and the terminal device selects ANTO. When the terminal device is in frequency band information not supported by ANT0, the antenna ANTO is disabled.

When the antenna ANT1 works, and when the terminal device is in frequency band information not supported by ANTO but supported by ANT1, the antenna switch 501 is opened, the antenna 502 is closed, and the antenna switch 503 enables a path of ANT1 to be connected. In this case, the terminal device selects the antenna ANT1.

When the antenna ANT1 works, the terminal device works in a carrier aggregation scenario supported by both ANTO and ANT1, the antenna switch 501 is closed, the terminal device supports frequency band information of ANTO by using Port 0, and the antenna switch 504 is thrown to a path of Port 0 to enable the path to be connected. In this case, the terminal device selects the antenna ANTO to send or receive data by using Port 0. The antenna switch 502 is closed, the terminal device supports frequency band information of ANT1 by using Port 1, and the antenna switch 503 is thrown to a path of ANT1 to enable the path to be connected. In this case, the terminal device selects the antenna ANT1 to send or receive data by using Port 1. For example, when the terminal device is in a working scenario of carrier aggregation CA_7+20 and ANT1 is also in a working state, in this case, the antenna ANTO supports frequency band information B7, and the antenna ANT1 supports frequency band information B20. In this case, when the frequency band information is B7, the terminal device uses the antenna ANTO to send or receive data by using Port 0, and when the frequency band information is B20, the terminal device uses the antenna ANT1 to receive or send data by using Port 1.

The terminal device selects a corresponding antenna based on whether ANT1 is in the working state and information about a working frequency band in which the terminal device is currently located.

By implementing the foregoing embodiment, the terminal device can meet requirements of different frequency band information and carrier aggregation working scenarios without increasing circuit complexity, and an additional antenna does not need to be configured, thereby reducing costs and improving performance.

FIG. 6 shows an embodiment according to this application. The embodiment is applied to a network deployment environment state of a fixed location, that is, user equipment is installed at a fixed location. When a location of a terminal device moves, an antenna is selected based on different locations to work.

As shown in FIG. 6, in a network deployment environment at a specified location, a location of user equipment is fixed and does not change. In this case, if a distance between user A and an antenna ANTO is relatively close, performance is relatively good when user A is connected to the antenna ANT0; and if a distance between user B and an antenna ANT1 is relatively close, performance is relatively good when user B is connected to the antenna ANT1.

In this case, information that the antenna ANTO is to be selected by the terminal device for access of user A and the antenna ANT1 is to be selected by the terminal device for access of user B is preset in the terminal device.

That is, when the terminal device is connected to user A at a fixed location, the terminal device selects the antenna ANTO to work, and is connected to user A by using the antenna ANTO to receive or send data. When the terminal device is connected to user B, the terminal device selects the antenna ANT1 to work, and is connected to user B by using the antenna ANT1 to receive or send data.

By implementing the foregoing embodiment, based on a network deployment environment at a relatively fixed location, the terminal device can select a specific antenna to work, thereby improving working performance of the terminal device, and obtaining good user experience.

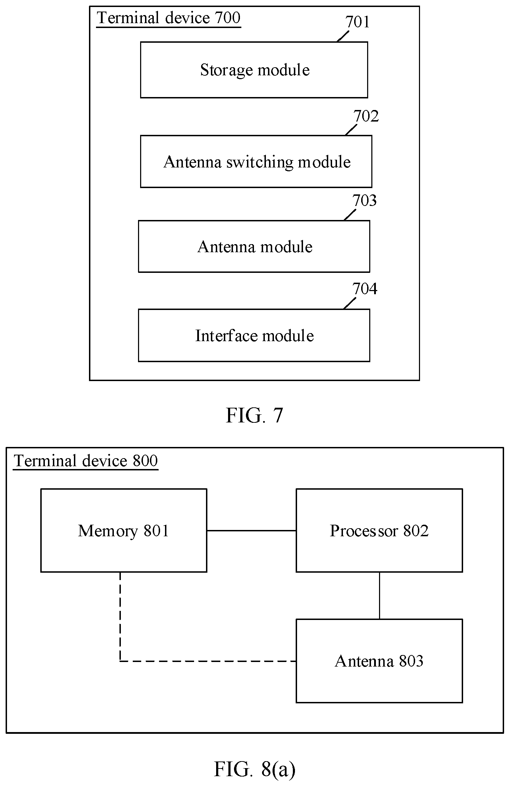

FIG. 7 is a schematic diagram of a terminal device according to this application. As shown in FIG. 7, a terminal device 700 includes a storage module 701, an antenna selection module 702, an antenna module 703, and an interface module 704. The storage module 701 is configured to store an antenna selection rule and antenna information that are preset by the terminal device 700. The antenna selection module 702 selects an antenna based on a frequency band or a carrier aggregation working scenario in which the terminal device is currently located. The antenna module 703 selects an antenna based on an instruction of the antenna selection module 704. The interface module 704 adjusts an antenna path of the terminal device based on the frequency band or the carrier aggregation working scenario in which the terminal device is currently located and the antenna selection rule.

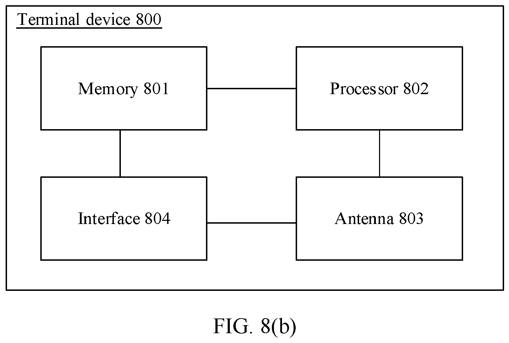

FIG. 8 is a schematic diagram of another terminal device according to this application. As shown in FIG. 8(a), a terminal device 800 includes a memory 801, a processor 802, and an antenna 803. The antenna 803 represents one or more antennas in the terminal device. With reference to FIG. 1, it can be learned that the terminal device 800 is the terminal device 100, the processor 802 is the same as the processor 100, and the antenna 803 includes the antenna 1 and the antenna 2.

The memory 801 is configured to store preset antenna information and an antenna selection rule that are preset by the terminal device. The processor 802 determines, based on a working scenario in which the terminal device is located, an antenna that needs to be selected by the terminal device. The antenna 803 performs selection based on an antenna selection instruction sent by the processor 802.

For example, when the terminal device 800 works when frequency band information is B42, and the memory 801 already stores "ANT0 is to be selected when B42 works", the processor 802 determines, based on the antenna selection rule stored in the memory 801, that the terminal device is to select the antenna ANTO. In this case, the antenna 803 selects ANTO based on an instruction of the processor 802.

Further, this application provides another embodiment. As shown in FIG. 8(b), the terminal device 800 further includes an interface 804, and the interface 804 is a plurality of interfaces in the terminal device.

For example, the interface 804 of the terminal device 800 includes two interfaces Port 0 and Port 1, configured to support different frequency band information. The terminal device 800 presets, in the memory 801, information about frequency bands supported by antennas ANTO and ANT1, and carrier aggregation that can be supported by a combination of the antennas ANTO and ANT1. The memory 801 further stores the antenna selection rule.

When the terminal device is in a working scenario of carrier aggregation CA_7+20, in this case, ANT1 also works normally. Based on "the antenna ANTO supports frequency band information B7 and ANT1 supports frequency band information B20" stored in the memory 801, the processor 802 determines that the terminal device 800 is to select the antenna ANTO when the frequency band information is B7 by using Port 0 in the interface 804, and the antenna ANTO is used to receive or send data; and the terminal device 800 is to select the antenna ANT1 when the frequency band information is B20 by using Port 1 in the interface 804, and the antenna ANT1 is used to receive or send data.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. An antenna selection method, applied to a terminal device (100), wherein the terminal device (100) comprises a first antenna (ANT0), a second antenna (ANT1) and a third antenna (ANT2), the first antenna (ANTO) and the second antenna (ANT1) support an LTE communications network, and the third antenna (ANT2) supports a Wi-Fi communications network, and the method comprises:
presetting, by the terminal device (100), antenna information and an antenna selection rule, wherein the antenna information comprises antenna isolation information, and the antenna isolation information comprises first isolation and second isolation, the first isolation is isolation between the first antenna (ANTO) and the third antenna (ANT2), the second isolation is isolation between the second antenna (ANT1) and the third antenna (ANT2); and
selecting, by the terminal device (100), the antenna based on the antenna information and the antenna selection rule, wherein the antenna selection rule comprises:
selecting, by the terminal device (100), the first antenna (ANTO) when the terminal device (100) accesses only the LTE communications network;
selecting, by the terminal device (100), the first antenna (ANTO) when the terminal device (100) simultaneously accesses the LTE communications network and the Wi-Fi communications network, and there is no coexistence risk between the LTE communications network and the Wi-Fi communications network;
selecting, by the terminal device (100), the first antenna (ANTO) when the terminal device (100) simultaneously accesses the LTE communications network and the Wi-Fi communications network, there is a coexistence risk between the LTE communications network and the Wi-Fi communications network, and the first isolation is greater than the second isolation; and
selecting, by the terminal device (100), the second antenna (ANT1) when the terminal device (100) simultaneously accesses the LTE communications network and the Wi-Fi communications network, there is a coexistence risk between the LTE communications network and the Wi-Fi communications network, and when the second isolation is greater than the first isolation.

2. The method according to claim 1, wherein the further antenna information comprise information about frequency bands supported by the first antenna (ANT0), the second antenna (ANT1), and the third antenna (ANT2).

3. The method according to claim 2, wherein
the first antenna (ANTO) supports the frequency band B40 and the frequency band B41;
the second antenna (ANT1) supports the frequency band B40 and the frequency band B41;
when the terminal device (100) is in a working scenario of the frequency band B40, isolation between the first antenna (ANTO) and the third antenna (ANT2) is greater than isolation between the second antenna (ANT1) and the third antenna (ANT2); and
when the terminal device (100) is in a working scenario of the frequency band B41, isolation between the antennas first antenna (ANTO) and the third antenna (ANT2) is less than isolation between the second antenna (ANT1) and the third antenna (ANT2).

4. The method according to claim 3, wherein the antenna selection rule comprises:
selecting, by the terminal device (100), the first antenna (ANTO) when the frequency bands B40 and B41 simultaneously work;
selecting, by the terminal device (100), the first antenna (ANTO) when the terminal device (100) sends orreceives data by using the two frequency bands B40 and B41;
selecting, by the terminal device (100), the first antenna (ANTO) when the terminal device (100) receives or sends data by using the frequency band B40; and
selecting, by the terminal device (100), the second antenna (ANT1) when the terminal device receives or sends data by using the frequency band B41.

5. The method according to claim 3 or 4, wherein the antenna selection rule comprises:
selecting, by the terminal device (100), the first antenna (ANTO) when the terminal device (100) works in the single frequency band B40;
selecting, by the terminal device (100), the first antenna (ANTO) when the terminal device (100) works in the single frequency band B41;
selecting, by the terminal device (100), the first antenna (ANTO) the terminal device works in the frequency band B40 and simultaneously accesses Wi-Fi;
selecting, by the terminal device (100), the second antenna (ANT1) when the terminal device works in the frequency band B41 and simultaneously accesses Wi-Fi;
selecting, by the terminal device (100), the first antenna (ANTO) when the terminal device works in the frequency band B40 and simultaneously accesses Wi-Fi; and
selecting, by the terminal device (100), the second antenna (ANT1) when the terminal device works in the frequency band B41 and simultaneously accesses Wi-Fi.

6. A terminal device (800), comprising a first antenna (ANT0), a second antenna (ANT1) and a third antenna (ANT2), wherein the first antenna (ANTO) and the second antenna (ANT1) are configured to support an LTE communications network, and the third antenna (ANT2) supports a Wi-Fi communications network, and the terminal device (800) further comprises:
a memory (801), wherein the memory (801) is configured to store preset antenna information and an antenna selection rule, wherein the antenna information comprises antenna isolation information, and the antenna isolation information comprises first isolation and second isolation, the first isolation is isolation between the first antenna (ANTO) and the third antenna (ANT2), the second isolation is isolation between the second antenna (ANT1) and the third antenna (ANT2); and
a processor (802), wherein the processor (802) is configured to select the antenna based on the antenna information and the antenna selection rule, and the antenna selection rule comprises:
selecting, by the terminal device (800), the first antenna (ANTO) when the terminal device (800) accesses only the LTE communications network;
selecting, by the terminal device (800), the first antenna (ANTO) when the terminal device (800) simultaneously accesses the LTE communications network and the Wi-Fi communications network, and there is no coexistence risk between the LTE communications network and the Wi-Fi communications network;
selecting, by the terminal device (800), the first antenna (ANTO) when the terminal device (800) simultaneously accesses the LTE communications network and the Wi-Fi communications network, there is a coexistence risk between the LTE communications network and the Wi-Fi communications network, and the first isolation is greater than the second isolation; and
selecting, by the terminal device (800), the second antenna (ANT1) when the terminal device (800) the terminal device (100) simultaneously accesses the LTE communications network and the Wi-Fi communications network, there is a coexistence risk between the LTE communications network and the Wi-Fi communications network, and when the second isolation is greater than the first isolation.

7. The terminal device (800) according to claim 6, wherein the further antenna information comprise information about frequency bands supported by the first antenna (ANT0), the second antenna (ANT1), and the third antenna (ANT2).

8. The terminal device (800) according to claim 7, wherein
the first antenna (ANTO) is configured to support the frequency band B40 and the frequency band B41;
the second antenna (ANT1) is configured to support the frequency band B40 and the frequency band B41;
when the terminal device (800) is in a working scenario of the frequency band B40, isolation between the first antenna (ANTO) and the third antenna (ANT2) is greater than isolation between the second antenna (ANT1) and the third antenna (ANT2); and
when the terminal device (800) is in a working scenario of the frequency band B41, isolation between the antennas first antenna (ANTO) and the third antenna (ANT2) is less than isolation between the second antenna (ANT1) and the third antenna (ANT2).

9. The terminal device (800) according to claim 8, wherein the antenna selection rule comprises:
selecting, by the terminal device (800), the first antenna (ANTO) when the frequency bands B40 and B41 simultaneously work;
selecting, by the terminal device (800), the first antenna (ANTO) when the terminal device (800) sends or receives data by using the two frequency bands B40 and B41;
selecting, by the terminal device (800), the first antenna (ANTO) when the terminal device (800) receives or sends data by using the frequency band B40; and
selecting, by the terminal device (800), the second antenna (ANT1) when the terminal device receives or sends data by using the frequency band B41.

10. The terminal device (800) according to claim 8 or 9, wherein the antenna selection rule comprises:
selecting, by the terminal device (800), the first antenna (ANTO) when the terminal device (800) works in the single frequency band B40;
selecting, by the terminal device (800), the first antenna (ANTO) when the terminal device (800) works in the single frequency band B41;
selecting, by the terminal device (800), the first antenna (ANTO) the terminal device works in the frequency band B40 and simultaneously accesses Wi-Fi;
selecting, by the terminal device (800), the second antenna (ANT1) when the terminal device works in the frequency band B41 and simultaneously accesses Wi-Fi;
selecting, by the terminal device (800), the first antenna (ANTO) when the terminal device works in the frequency band B40 and simultaneously accesses Wi-Fi; and
selecting, by the terminal device (800), the second antenna (ANT1) when the terminal device works in the frequency band B41 and simultaneously accesses Wi-Fi.

## Patentansprüche

1. Antennenauswahlverfahren, das auf eine Endgerätevorrichtung (100) angewendet wird, wobei die Endgerätevorrichtung (100) eine erste Antenne (ANTO), eine zweite Antenne (ANT1) und eine dritte Antenne (ANT2) umfasst, die erste Antenne (ANTO) und die zweite Antenne (ANT1) ein LTE-Kommunikationsnetzwerk unterstützen und die dritte Antenne (ANT2) ein Wi-Fi-Kommunikationsnetzwerk unterstützt, und das Verfahren Folgendes umfasst:
Vorgeben von Antenneninformationen und einer Antennenauswahlregel durch die Endgerätevorrichtung (100), wobei die Antenneninformationen Antennenisolationsinformationen umfassen und die Antennenisolationsinformationen eine erste Isolation und eine zweite Isolation umfassen, wobei die erste Isolation eine Isolation zwischen der ersten Antenne (ANTO) und der dritten Antenne (ANT2) ist und wobei die zweite Isolation eine Isolation zwischen der zweiten Antenne (ANT1) und der dritten Antenne (ANT2) ist; und
Auswählen der Antenne durch die Endgerätevorrichtung (100) basierend auf den Antenneninformationen und der Antennenauswahlregel, wobei die Antennenauswahlregel Folgendes umfasst:
Auswählen der ersten Antenne (ANTO) durch die Endgerätevorrichtung (100), wenn die Endgerätevorrichtung (100) nur auf das LTE-Kommunikationsnetzwerk zugreift;
Auswählen der ersten Antenne (ANTO) durch die Endgerätevorrichtung (100), wenn die Endgerätevorrichtung (100) gleichzeitig auf das LTE-Kommunikationsnetzwerk und das Wi-Fi-Kommunikationsnetzwerk zugreift und kein Koexistenzrisiko zwischen dem LTE-Kommunikationsnetzwerk und dem Wi-Fi-Kommunikationsnetzwerk besteht;
Auswählen der ersten Antenne (ANTO) durch die Endgerätevorrichtung (100), wenn die Endgerätevorrichtung (100) gleichzeitig auf das LTE-Kommunikationsnetzwerk und das Wi-Fi-Kommunikationsnetzwerk zugreift, ein Koexistenzrisiko zwischen dem LTE-Kommunikationsnetzwerk und dem Wi-Fi-Kommunikationsnetzwerk besteht und die erste Isolation größer als die zweite Isolation ist; und
Auswählen der zweiten Antenne (ANT1) durch die Endgerätevorrichtung (100), wenn die Endgerätevorrichtung (100) gleichzeitig auf das LTE-Kommunikationsnetzwerk und das Wi-Fi-Kommunikationsnetzwerk zugreift, ein Koexistenzrisiko zwischen dem LTE-Kommunikationsnetzwerk und dem Wi-Fi-Kommunikationsnetzwerk besteht und die zweite Isolation größer als die erste Isolation ist.

2. Verfahren nach Anspruch 1, wobei die weiteren Antenneninformationen Informationen über Frequenzbänder umfassen, die durch die erste Antenne (ANTO), die zweite Antenne (ANT1) und die dritte Antenne (ANT2) unterstützt werden.

3. Verfahren nach Anspruch 2, wobei
die erste Antenne (ANTO) das Frequenzband B40 und das Frequenzband B41 unterstützt;
die zweite Antenne (ANT1) das Frequenzband B40 und das Frequenzband B41 unterstützt;
wenn sich die Endgerätevorrichtung (100) in einem Arbeitsszenario des Frequenzbandes B40 befindet, die Isolation zwischen der ersten Antenne (ANTO) und der dritten Antenne (ANT2) größer ist als die Isolation zwischen der zweiten Antenne (ANT1) und der dritten Antenne (ANT2); und
wenn sich die Endgerätevorrichtung (100) in einem Arbeitsszenario des Frequenzbandes B41 befindet, die Isolation zwischen der ersten Antenne (ANTO) und der dritten Antenne (ANT2) kleiner ist als die Isolation zwischen der zweiten Antenne (ANT1) und der dritten Antenne (ANT2).

4. Verfahren nach Anspruch 3, wobei die Antennenauswahlregel Folgendes umfasst:
Auswählen der ersten Antenne (ANTO) durch die Endgerätevorrichtung (100), wenn die Frequenzbänder B40 und B41 gleichzeitig arbeiten;
Auswählen der ersten Antenne (ANTO) durch die Endgerätevorrichtung (100), wenn die Endgerätevorrichtung (100) Daten unter Verwendung der beiden Frequenzbänder B40 und B41 sendet oder empfängt;
Auswählen der ersten Antenne (ANTO) durch die Endgerätevorrichtung (100), wenn die Endgerätevorrichtung (100) Daten unter Verwendung des Frequenzbandes B40 empfängt oder sendet;
Auswählen der zweiten Antenne (ANT1) durch die Endgerätevorrichtung (100), wenn die Endgerätevorrichtung Daten unter Verwendung des Frequenzbandes B41 empfängt oder sendet.

5. Verfahren nach Anspruch 3 oder 4, wobei die Antennenauswahlregel Folgendes umfasst:
Auswählen der ersten Antenne (ANTO) durch die Endgerätevorrichtung (100), wenn die Endgerätevorrichtung (100) in dem einzelnen Frequenzband B40 arbeitet;
Auswählen der ersten Antenne (ANTO) durch die Endgerätevorrichtung (100), wenn die Endgerätevorrichtung (100) in dem einzelnen Frequenzband B41 arbeitet;
Auswählen der ersten Antenne (ANTO) durch die Endgerätevorrichtung (100), wenn die Endgerätevorrichtung in dem Frequenzband B40 arbeitet und gleichzeitig auf Wi-Fi zugreift;
Auswählen der zweiten Antenne (ANT1) durch die Endgerätevorrichtung (100), wenn die Endgerätevorrichtung in dem Frequenzband B41 arbeitet und gleichzeitig auf Wi-Fi zugreift;
Auswählen der ersten Antenne (ANTO) durch die Endgerätevorrichtung (100), wenn die Endgerätevorrichtung in dem Frequenzband B40 arbeitet und gleichzeitig auf Wi-Fi zugreift; und
Auswählen der zweiten Antenne (ANT1) durch die Endgerätevorrichtung (100), wenn die Endgerätevorrichtung in dem Frequenzband B41 arbeitet und gleichzeitig auf Wi-Fi zugreift.

6. Endgerätevorrichtung (800), umfassend eine erste Antenne (ANT0), eine zweite Antenne (ANT1) und eine dritte Antenne (ANT2), wobei die erste Antenne (ANTO) und die zweite Antenne (ANT1) dazu konfiguriert sind, ein LTE-Kommunikationsnetzwerk zu unterstützen, und die dritte Antenne (ANT2) ein Wi-Fi-Kommunikationsnetzwerk unterstützt und die Endgerätevorrichtung (800) ferner Folgendes umfasst:
einen Speicher (801), wobei der Speicher (801) dazu konfiguriert ist, vorgegebene Antenneninformationen und eine vorgegebene Antennenauswahlregel zu speichern, wobei die Antenneninformationen Antennenisolationsinformationen umfassen und die Antennenisolationsinformationen eine erste Isolation und eine zweite Isolation umfassen, wobei die erste Isolation eine Isolation zwischen der ersten Antenne (ANTO) und der dritten Antenne (ANT2) ist, wobei die zweite Isolation eine Isolation zwischen der zweiten Antenne (ANT1) und der dritten Antenne (ANT2) ist; und
einen Prozessor (802), wobei der Prozessor (802) dazu konfiguriert ist, die Antenne basierend auf den Antenneninformationen und der Antennenauswahlregel auszuwählen, und die Antennenauswahlregel Folgendes umfasst:
Auswählen der ersten Antenne (ANTO) durch die Endgerätevorrichtung (800), wenn die Endgerätevorrichtung (800) nur auf das LTE-Kommunikationsnetzwerk zugreift;
Auswählen der ersten Antenne (ANTO) durch die Endgerätevorrichtung (800), wenn die Endgerätevorrichtung (800) gleichzeitig auf das LTE-Kommunikationsnetzwerk und das Wi-Fi-Kommunikationsnetzwerk zugreift und kein Koexistenzrisiko zwischen dem LTE-Kommunikationsnetzwerk und dem Wi-Fi-Kommunikationsnetzwerk besteht;
Auswählen der ersten Antenne (ANTO) durch die Endgerätevorrichtung (800), wenn die Endgerätevorrichtung (800) gleichzeitig auf das LTE-Kommunikationsnetzwerk und das Wi-Fi-Kommunikationsnetzwerk zugreift, ein Koexistenzrisiko zwischen dem LTE-Kommunikationsnetzwerk und dem Wi-Fi-Kommunikationsnetzwerk besteht und die erste Isolation größer als die zweite Isolation ist; und
Auswählen der zweiten Antenne (ANT1) durch die Endgerätevorrichtung (800), wenn die Endgerätevorrichtung (800) gleichzeitig auf das LTE-Kommunikationsnetzwerk und das Wi-Fi-Kommunikationsnetzwerk zugreift, ein Koexistenzrisiko zwischen dem LTE-Kommunikationsnetzwerk und dem Wi-Fi-Kommunikationsnetzwerk besteht und die zweite Isolation größer als die erste Isolation ist.

7. Endgerätevorrichtung (800) nach Anspruch 6, wobei die weiteren Antenneninformationen Informationen über Frequenzbänder umfassen, die durch die erste Antenne (ANTO), die zweite Antenne (ANT1) und die dritte Antenne (ANT2) unterstützt werden.

8. Endgerätevorrichtung (800) nach Anspruch 7, wobei
die erste Antenne (ANTO) dazu konfiguriert ist, das Frequenzband B40 und das Frequenzband B41 zu unterstützen;
die zweite Antenne (ANT1) dazu konfiguriert ist, das Frequenzband B40 und das Frequenzband B41 zu unterstützen;
wenn sich die Endgerätevorrichtung (800) in einem Arbeitsszenario des Frequenzbandes B40 befindet, die Isolation zwischen der ersten Antenne (ANTO) und der dritten Antenne (ANT2) größer ist als die Isolation zwischen der zweiten Antenne (ANT1) und der dritten Antenne (ANT2); und
wenn sich die Endgerätevorrichtung (800) in einem Arbeitsszenario des Frequenzbandes B41 befindet, die Isolation zwischen der ersten Antenne (ANTO) und der dritten Antenne (ANT2) kleiner ist als die Isolation zwischen der zweiten Antenne (ANT1) und der dritten Antenne (ANT2).

9. Endgerätevorrichtung (800) nach Anspruch 8, wobei die Antennenauswahlregel Folgendes umfasst:
Auswählen der ersten Antenne (ANTO) durch die Endgerätevorrichtung (800), wenn die Frequenzbänder B40 und B41 gleichzeitig arbeiten;
Auswählen der ersten Antenne (ANTO) durch die Endgerätevorrichtung (800), wenn die Endgerätevorrichtung (800) Daten unter Verwendung der beiden Frequenzbänder B40 und B41 sendet oder empfängt;
Auswählen der ersten Antenne (ANTO) durch die Endgerätevorrichtung (800), wenn die Endgerätevorrichtung (800) Daten unter Verwendung des Frequenzbandes B40 empfängt oder sendet; und
Auswählen der zweiten Antenne (ANT1) durch die Endgerätevorrichtung (800), wenn die Endgerätevorrichtung Daten unter Verwendung des Frequenzbandes B41 empfängt oder sendet.

10. Endgerätevorrichtung (800) nach Anspruch 8 oder 9, wobei die Antennenauswahlregel Folgendes umfasst:
Auswählen der ersten Antenne (ANTO) durch die Endgerätevorrichtung (800), wenn die Endgerätevorrichtung (800) in dem einzelnen Frequenzband B40 arbeitet;
Auswählen der ersten Antenne (ANTO) durch die Endgerätevorrichtung (800), wenn die Endgerätevorrichtung (800) in dem einzelnen Frequenzband B41 arbeitet;
Auswählen der ersten Antenne (ANTO) durch die Endgerätevorrichtung (800), wenn die Endgerätevorrichtung in dem Frequenzband B40 arbeitet und gleichzeitig auf Wi-Fi zugreift;
Auswählen der zweiten Antenne (ANT1) durch die Endgerätevorrichtung (800), wenn die Endgerätevorrichtung in dem Frequenzband B41 arbeitet und gleichzeitig auf Wi-Fi zugreift;
Auswählen der ersten Antenne (ANTO) durch die Endgerätevorrichtung (800), wenn die Endgerätevorrichtung in dem Frequenzband B40 arbeitet und gleichzeitig auf Wi-Fi zugreift; und
Auswählen der zweiten Antenne (ANT1) durch die Endgerätevorrichtung (800), wenn die Endgerätevorrichtung in dem Frequenzband B41 arbeitet und gleichzeitig auf Wi-Fi zugreift.

## Revendications

1. Procédé de sélection d'antenne, appliqué à un dispositif terminal (100), dans lequel le dispositif terminal (100) comprend une première antenne (ANTO), une deuxième antenne (ANT1) et une troisième antenne (ANT2), la première antenne (ANTO) et la deuxième antenne (ANT1) prennent en charge un réseau de communication LTE, et la troisième antenne (ANT2) prend en charge un réseau de communication Wi-Fi, et le procédé comprend :
le préréglage, par le dispositif terminal (100), des informations d'antenne et d'une règle de sélection d'antenne, dans laquelle les informations d'antenne comprennent des informations d'isolement d'antenne, et les informations d'isolement d'antenne comprennent un premier isolement et un deuxième isolement, le premier isolement étant un isolement entre la première antenne (ANTO) et la troisième antenne (ANT2), le deuxième isolement étant un isolement entre la deuxième antenne (ANT1) et la troisième antenne (ANT2) ; et
la sélection, par le dispositif terminal (100), de l'antenne sur la base des informations d'antenne et de la règle de sélection d'antenne, dans laquelle la règle de sélection d'antenne comprend :
la sélection, par le dispositif terminal (100), de la première antenne (ANTO) lorsque le dispositif terminal (100) accède uniquement au réseau de communication LTE ;
la sélection, par le dispositif terminal (100), de la première antenne (ANTO) lorsque le dispositif terminal (100) accède simultanément au réseau de communication LTE et au réseau de communication Wi-Fi, et qu'il n'y a aucun risque de coexistence entre le réseau de communication LTE et le réseau de communication Wi-Fi ;
la sélection, par le dispositif terminal (100), de la première antenne (ANTO) lorsque le dispositif terminal (100) accède simultanément au réseau de communication LTE et au réseau de communication Wi-Fi, qu'il y a un risque de coexistence entre le réseau de communication LTE et le réseau de communication Wi-Fi, et que le premier isolement est plus grand que le deuxième isolement ; et
la sélection, par le dispositif terminal (100), de la deuxième antenne (ANT1) lorsque le dispositif terminal (100) accède simultanément au réseau de communication LTE et au réseau de communication Wi-Fi, qu'il y a un risque de coexistence entre le réseau de communication LTE et le réseau de communication Wi-Fi, et que le deuxième isolement est plus grand que le premier isolement.

2. Procédé selon la revendication 1, dans lequel les informations supplémentaires concernant l'antenne comprennent des informations sur les bandes de fréquences prises en charge par la première antenne (ANT0), la deuxième antenne (ANT1) et la troisième antenne (ANT2).

3. Procédé selon la revendication 2, dans lequel
la première antenne (ANTO) prend en charge la bande de fréquences B40 et la bande de fréquences B41 ;
la deuxième antenne (ANT1) prend en charge la bande de fréquences B40 et la bande de fréquences B41 ;
lorsque le dispositif terminal (100) se trouve dans un scénario de fonctionnement de la bande de fréquences B40, l'isolement entre la première antenne (ANTO) et la troisième antenne (ANT2) est supérieure à l'isolement entre la deuxième antenne (ANT1) et la troisième antenne (ANT2) ; et
lorsque le dispositif terminal (100) se trouve dans un scénario de fonctionnement de la bande de fréquences B41, l'isolement entre la première antenne (ANTO) et la troisième antenne (ANT2) est supérieur à l'isolement entre la deuxième antenne (ANT1) et la troisième antenne (ANT2).

4. Procédé selon la revendication 3, dans lequel la règle de sélection d'antenne comprend :
la sélection, par le dispositif terminal (100), de la première antenne (ANTO) lorsque les bandes de fréquences B40 et B41 fonctionnent simultanément ;
la sélection, par le dispositif terminal (100), de la première antenne (ANTO) lorsque le dispositif terminal (100) envoie ou reçoit des données en utilisant les deux bandes de fréquences B40 et B41 ;
la sélection, par le dispositif terminal (100), de la première antenne (ANTO) lorsque le dispositif terminal (100) reçoit ou envoie des données en utilisant la bande de fréquences B40 ; et
la sélection, par le dispositif terminal (100), de la deuxième antenne (ANT1) lorsque le dispositif terminal reçoit ou envoie des données en utilisant la bande de fréquences B41.

5. Procédé selon la revendication 3 ou 4, dans lequel le procédé comprend en outre :
la sélection, par le dispositif terminal (100), de la première antenne (ANTO) lorsque le dispositif terminal (100) fonctionne dans la bande de fréquences unique B40 ;
la sélection, par le dispositif terminal (100), de la première antenne (ANTO) lorsque le dispositif terminal (100) fonctionne dans la bande de fréquences unique B41 ;
la sélection, par le dispositif terminal (100), de la première antenne (ANTO) lorsque le dispositif terminal fonctionne dans la bande de fréquences B40 et accède simultanément au Wi-Fi ;
la sélection, par le dispositif terminal (100), de la deuxième antenne (ANT1) lorsque le dispositif terminal fonctionne dans la bande de fréquences B41 et accède simultanément au Wi-Fi ;
la sélection, par le dispositif terminal (100), de la première antenne (ANTO) lorsque le dispositif terminal fonctionne dans la bande de fréquences B40 et accède simultanément au Wi-Fi ; et
la sélection, par le dispositif terminal (100), de la deuxième antenne (ANT1) lorsque le dispositif terminal fonctionne dans la bande de fréquences B41 et accède simultanément au Wi-Fi.

6. Un dispositif terminal (800) comprenant une première antenne (ANTO), une deuxième antenne (ANT1) et une troisième antenne (ANT2), dans lequel la première antenne (ANTO) et la deuxième antenne (ANT1) sont configurées pour prendre en charge un réseau de communication LTE, et la troisième antenne (ANT2) prend en charge un réseau de communication Wi-Fi, et le dispositif terminal (800) comprend en outre :
une mémoire (801), dans laquelle la mémoire (801) est configurée pour stocker des informations d'antenne pré-réglées et une règle de sélection d'antenne, dans laquelle les informations d'antenne comprennent des informations d'isolement d'antenne, et les informations d'isolement d'antenne comprennent un premier isolement et un deuxième isolement, le premier isolement étant un isolement entre la première antenne (ANTO) et la troisième antenne (ANT2), le deuxième isolement étant un isolement entre la deuxième antenne (ANT1) et la troisième antenne (ANT2) ; et
un processeur (802), dans lequel le processeur (802) est configuré pour sélectionner l'antenne sur la base des informations d'antenne et de la règle de sélection d'antenne, et la règle de sélection d'antenne comprend :
la sélection, par le dispositif terminal (800), de la première antenne (ANTO) lorsque le dispositif terminal (800) accède uniquement au réseau de communication LTE ;
la sélection, par le dispositif terminal (800), de la première antenne (ANTO) lorsque le dispositif terminal (800) accède simultanément au réseau de communication LTE et au réseau de communication Wi-Fi, et qu'il n'y a aucun risque de coexistence entre le réseau de communication LTE et le réseau de communication Wi-Fi ;
la sélection, par le dispositif terminal (800), de la première antenne (ANTO) lorsque le dispositif terminal (800) accède simultanément au réseau de communication LTE et au réseau de communication Wi-Fi, qu'il y a un risque de coexistence entre le réseau de communication LTE et le réseau de communication Wi-Fi, et que le premier isolement est plus grand que le deuxième isolement ; et
la sélection, par le dispositif terminal (800), de la deuxième antenne (ANT1) lorsque le dispositif terminal (800) accède simultanément au réseau de communication LTE et au réseau de communication Wi-Fi, qu'il y a un risque de coexistence entre le réseau de communication LTE et le réseau de communication Wi-Fi, et que le deuxième isolement est plus grand que le premier isolement.

7. Le dispositif terminal (800) selon la revendication 6, dans lequel les informations supplémentaires concernant l'antenne comprennent des informations sur les bandes de fréquences prises en charge par la première antenne (ANT0), la deuxième antenne (ANT1) et la troisième antenne (ANT2).

8. Le dispositif terminal (800) selon la revendication 7, dans lequel
la première antenne (ANTO) est configurée pour prendre en charge la bande de fréquences B40 et la bande de fréquences B41 ;
la deuxième antenne (ANT1) est configurée pour prendre en charge la bande de fréquences B40 et la bande de fréquences B41 ; lorsque le dispositif terminal (800) se trouve dans un scénario de fonctionnement de la bande de fréquences B40, l'isolement entre la première antenne (ANTO) et la troisième antenne (ANT2) est supérieur à l'isolement entre la deuxième antenne (ANT1) et la troisième antenne (ANT2) ; et
lorsque le dispositif terminal (800) se trouve dans un scénario de fonctionnement de la bande de fréquences B41, l'isolement entre la première antenne (ANTO) et la troisième antenne (ANT2) est supérieur à l'isolement entre la deuxième antenne (ANT1) et la troisième antenne (ANT2).

9. Le dispositif terminal (800) selon la revendication 8, dans lequel la règle de sélection d'antenne comprend :
la sélection, par le dispositif terminal (800), de la première antenne (ANTO) lorsque les bandes de fréquences B40 et B41 fonctionnent simultanément ;
la sélection, par le dispositif terminal (800), de la première antenne (ANTO) lorsque le dispositif terminal (800) envoie ou reçoit des données en utilisant les deux bandes de fréquences B40 et B41 ;
la sélection, par le dispositif terminal (800), de la première antenne (ANTO) lorsque le dispositif terminal (800) reçoit ou envoie des données en utilisant la bande de fréquences B40 ; et
la sélection, par le dispositif terminal (800), de la deuxième antenne (ANT1) lorsque le dispositif terminal reçoit ou envoie des données en utilisant la bande de fréquences B41.

10. Le dispositif terminal (800) selon la revendication 8 ou 9, dans lequel la règle de sélection d'antenne comprend :
la sélection, par le dispositif terminal (800), de la première antenne (ANTO) lorsque le dispositif terminal (800) fonctionne dans la bande de fréquence unique B40 ;
la sélection, par le dispositif terminal (800), de la première antenne (ANTO) lorsque le dispositif terminal (800) fonctionne dans la bande de fréquence unique B41 ;
la sélection, par le dispositif terminal (800), de la première antenne (ANTO) lorsque le dispositif terminal fonctionne dans la bande de fréquences B40 et accède simultanément au Wi-Fi ;
la sélection, par le dispositif terminal (800), de la deuxième antenne (ANT1) lorsque le dispositif terminal fonctionne dans la bande de fréquences B41 et accède simultanément au Wi-Fi ;
la sélection, par le dispositif terminal (800), de la première antenne (ANTO) lorsque le dispositif terminal fonctionne dans la bande de fréquences B40 et accède simultanément au Wi-Fi ;
et
la sélection, par le dispositif terminal (800), de la deuxième antenne (ANT1) lorsque le dispositif terminal fonctionne dans la bande de fréquences B41 et accède simultanément au Wi-Fi.
